# EUROPÄISCHE PATENTSCHRIFT

(11) **EP 3 095 975 B1**
(45) Veröffentlichungstag und Bekanntmachung des Hinweises auf die Patenterteilung: **29.07.2020**
(21) Anmeldenummer: 16000859.5
(22) Anmeldetag: 15.04.2016
(51) Int. Cl.: F01M 11/06, F01M 13/04, F01M 13/02

(54) **KURBELGEHÄUSEENTLÜFTUNGSSYSTEM FÜR ÜBERROLLFÄHIGE UND/ODER HOCHSCHRÄGLAGENFÄHIGE MOTOREN**
CRANKCASE VENTILATION SYSTEM FOR MOTORS CAPABLE OF ROLLING OVER AND/OR BANKING
SYSTEME DE VENTILATION DE CARTER DE VILEBREQUIN POUR MOTEURS ENCASTRES ET/OU EN POSITION INCLINEE HAUTE

(30) Priorität: 19.05.2015 DE 102015006446
(43) Veröffentlichungstag der Anmeldung: 23.11.2016
(73) Patentinhaber: MAN Truck & Bus SE, 80995 München (DE)
(72) Erfinder: Hügel, Dietmar, 90441 Nürnberg (DE)
(74) Vertreter: v. Bezold & Partner Patentanwälte - PartG mbB

(56) Entgegenhaltungen:
- JP-A- S61 182 410
- JP-U- S58 156 111
- US-A- 6 029 638

## Beschreibung

Die Erfindung betrifft ein Kurbelgehäuseentlüftungssystem, vorzugsweise für einen im Betrieb überrollfähigen und/oder hochschräglagenfähigen Motor, z. B. einen Marinemotor, insbesondere für ein Schiff oder Boot. Die US6029638A beschreibt solch ein System für einen Motor mit einem Trockensumpf ("dry sump lubricating system").

Aus der Praxis sind Kurbelgehäuseentlüftungssysteme für Schiffs-/ Bootsmotoren bekannt, mit einer Entnahmestelle für Blowby, einer Blowby-Leitung von der Entnahmestelle zu einem Blowby-Abscheider mit Druckmembran, einer Ölrücklaufleitung von dem Ölabscheider in eine Ölwanne und einer Leitung für gereinigtes Blowby von dem Blowby-Abscheider zu einem Ansaugstutzen an einem Verdichter.

Nachteil der vorbekannten Kurbelgehäuseentlüftungssysteme ist insbesondere, dass bei hohen Schräglagen und/oder bei Überrollen des Motors Öl von der Kurbelgehäuseentlüftung mitgerissen, insbesondere angesaugt, wird und so in einen Brennraum gelangt, was in der Folge zu einem Motorschaden führt.

Eine Aufgabe der Erfindung ist es, ein verbessertes Kurbelgehäuseentlüftungssystem zu schaffen, vorzugsweise ein Kurbelgehäuseentlüftungssystem zur Ermöglichung einer Überrollfähigkeit und/oder eines Hoch-Schräglagenbetriebs eines Motors, insbesondere ohne dass Öl in den Brennraum eines Motors gelangen kann, was in der Folge zu einem Motorschaden führen kann.

Diese Aufgabe kann mit den Merkmalen des Hauptanspruchs gelöst werden. Vorteilhafte Weiterbildungen der Erfindung können den Unteransprüchen und der folgenden Beschreibung bevorzugter Ausführungsformen der Erfindung entnommen werden.

Die Erfindung schafft ein Kurbelgehäuseentlüftungssystem, zweckmäßig für einen Motor, mit einem Kurbelgehäuse, vorzugsweise zumindest einer Entnahmestelle für Blowby und zumindest einem Blowby-Abscheider.

Der Motor ist vorzugsweise ein Schiffs- oder Bootsmotor, insbesondere für den Einsatz in einem hochdynamischen Schiff oder Boot, wie z. B. einem Rettungs- und/oder Küstenboot.

Das Kurbelgehäuseentlüftungssystem zeichnet sich insbesondere dadurch aus, dass es für einen im Betrieb überrollfähigen (z. B. überkopf-drehbaren) und/oder hochschräglagenfähigen Motor ausgeführt ist und/oder zur Ermöglichung einer Überrollfähigkeit eines Motors im Betrieb und/oder eines Hoch-Schräglagenbetriebs eines Motors ausgeführt ist, vorzugsweise ohne dass Öl in den Brennraum eines Motors gelangen kann, was in der Folge zu einem Motorschaden führen kann.

Das Kurbelgehäuseentlüftungssystem kann hierzu insbesondere zusätzlich zum zumindest einen Blowby-Abscheider zumindest einen Blowby-Abscheidebehälter aufweisen, wobei der zumindest eine Blowby-Abscheider und der zumindest eine Blowby-Abscheidebehälter miteinander in Verbindung stehen.

Das Merkmal "Hoch-Schräglagenbetrieb" und/oder "Hoch-Schräglagenfähigkeit" umfasst im Rahmen der Erfindung insbesondere Neigungen des Motors und/oder des Kurbelgehäuseentlüftungssystems von über 45°, über 60°, über 75° oder über 80° relativ zur Horizontalen. Es ist zweckmäßig möglich, aber nicht zwigend, dass es dabei in der Folge ebenfalls zu einem Überrollen des Motors und/oder des Kurbelgehäuseentlüftungssystems kommt.

Es ist möglich, dass der Blowby-Abscheidebehälter über dem Niveau, insbesondere oberhalb des zumindest einen Blowby-Abscheiders angeordnet ist, zweckmäßig unmittelbar benachbart dazu.

Der Blowby-Abscheidebehälter kann ferner seitlich an einem Motor angeordnet, z. B. montiert sein.

Der Blowby-Abscheidebehälter kann des Weiteren vom Motor separiert angeordnet sein. Der Blowby-Abscheidebehälter kann z. B. an einem Fahrzeugrahmen, Fundamentrahmen, Schiffswand, etc. befestigt sein. Der Blowby-Abscheidebehälter kann zweckmäßig mit zumindest einer (vorzugsweise flexiblen) Leitung mit dem Motor verbunden sein.

Der Blowby-Abscheider kann z. B. über zumindest ein Blowby-Verbindungsmittel (z. B. eine Verbindungsleitung) mit dem Blowby-Abscheidebehälter verbunden sein. Das Blowby-Verbindungsmittel mündet vorzugsweise in einem oberen Abschnitt des Blowby-Abscheidebehälters, vorzugsweise unmittelbar unter einem Dach-/ oder Deckenabschnitt oder zumindest benachbart dazu.

Der Blowby-Abscheidebehälter kann vorzugsweise über zumindest eine Blowby-Verbindungseinrichtung (z. B. eine Verbindungsleitung) mit der zumindest einen Entnahmestelle verbunden sein. Die Blowby-Verbindungseinrichtung mündet vorzugsweise in einem oberen Abschnitt des Blowby-Abscheidebehälters, z. B. unmittelbar unter einem Dach-/ oder Deckenabschnitt oder zumindest benachbart dazu.

Das Blowby-Verbindungsmittel kann mit einem Absperrteil verbunden sein. Das Absperrteil dient vorzugsweise zum Verhindern einer Blowby-Strömung aus dem Blowby-Abscheidebehälter in Richtung des zumindest einen Blowby-Abscheiders oder gar in den Blowby-Abscheider hinein. Es ist möglich, dass das Absperrteil in den Blowby-Abscheidebehälter integriert ist und/oder ausgeführt ist, um elektrisch, mechanisch oder magnetisch ansteuerbar zu sein. Das Absperrteil kann z. B. als Magnetventil oder Klappe ausgeführt sein.

Es ist möglich, dass das Kurbelgehäuseentlüftungssystem auch ohne das Absperrteil funktionsfähig ist. In diesem Fall fungiert der Blowby-Abscheidebehälter als Sammelvolumen, Grob- und/oder Vorabscheider.

Es ist möglich, dass die zumindest eine Blowby-Verbindungseinrichtung und/oder das zumindest eine Blowby-Verbindungsmittel, vorzugsweise im Blowby-Abscheidebehälter, einen zweckmäßig oberen z. B. im Wesentlichen horizontalen Abschnitt und einen zweckmäßig davon nach unten abgehenden Abschnitt umfasst. Der nach unten abgehende Abschnitt kann vorzugsweise im Wesentlichen vertikal ausgerichtet sein. Die Verläufe (horizontal/vertikal) können auch nur tendenziell sein, funktionsrelevant ist der Verlauf steigend bzw. fallend bei Anordnung des Abscheidebehälters in der oberen Motorpartie.

Die zumindest eine Blowby-Verbindungseinrichtung und/oder das zumindest eine Blowby-Verbindungsmittel kann z. B. im Wesentlichen L-förmig ausgebildet sein. Der nach unten abgehende Abschnitt der zumindest einen Blowby-Verbindungseinrichtung kann vorzugsweise mit der zumindest einen Entnahmestelle verbunden sein.

Der nach unten abgehende Abschnitt des zumindest einen Blowby-Verbindungsmittels kann vorzugsweise mit dem Blowby-Abscheider verbunden sein.

Der Blowby-Abscheidebehälter kann über zumindest ein Öl-Rücklaufelement (z. B. Rücklaufleitung) mit einer Ölwanne verbunden sein. Über das Öl-Rücklaufelement kann vorzugweise Öl aus dem Blowby-Abscheidebehälter in die Ölwanne rückgeführt werden.

Es ist möglich, dass der zumindest eine Blowby-Abscheider über zumindest ein Öl-Rücklaufmittel (z. B. Rücklaufleitung) mit einer Ölwanne verbunden ist. Über das Öl-Rücklaufmittel kann Öl aus dem Blowby-Abscheider in die Ölwanne rückgeführt werden.

Das Öl-Rücklaufmittel und/oder das Öl-Rücklaufelement sind insbesondere zur Mündung in einem in der Ölwanne befindlichen Ölsumpf ausgeführt.

Das Öl-Rücklaufmittel kann ein Sicherheitsmittel aufweisen. Das Sicherheitsmittel kann ausgeführt sein, um eine Rückströmung von Öl aus der Ölwanne in den Blowby-Abscheider zu verhindern. Das Sicherheitsmittel kann z. B. als Rückschlagventil, Magnetventilklappe oder sonstiges Absperrorgan ausgeführt sein.

Es ist möglich, dass das Kurbelgehäuseentlüftungssystem einen Auffangbehälter für beim Überrollen und/oder im Hochschräglagenbetrieb eventuell austretendes Öl aufweist. Der Auffangbehälter kann z. B. mit dem Öl-Rücklaufelement verbunden sein. Es ist möglich, dass ein Sicherheitselement zur Öffnung beim Überrollen und/oder im Hochschräglagenbetrieb ausgeführt ist, so dass das eventuell austretende Öl über das Sicherheitselement in den Auffangbehälter gelangen kann. Wenn insbesondere der Druck im Kurbelgehäuseentlüftungssystem über ein zulässiges Niveau ansteigt, z. B. beim Überrollen und/oder einem Hoch-schräglagenbetrieb, wird vorzugsweise das Absperrteil geschlossen und das Sicherheitselement geöffnet.

Das Sicherheitselement kann z. B. in das Öl-Rücklaufelement, an oder in den Auffangbehälter oder eine Leitung zwischen dem Öl-Rücklaufelement und dem Auffangbehälter integriert sein.

Das Sicherheitselement kann als Klappe oder Ventil ausgeführt sein, vorzugsweise als Überdruck- und/oder Magnetventil.

Das Kurbelgehäuseentlüftungssystem kann zumindest eine Erfassungseinrichtung zur mittelbaren oder unmittelbaren Erfassung von Schräglagen des Motors umfassen. Die Motor-schräglagen können zweckmäßig während des Motorbetriebs erfasst werden, z. B. mit Hilfe zumindest eines Neigungssensors, seismischen Sensors, Pendels, etc.

Es ist möglich, dass das Absperrteil für eine vordefinierte Zeit geschlossen wird und/oder der Motor reduziert betrieben oder abgestellt wird, wenn durch die Erfassungseinrichtung eine vorbestimmte und/oder unzulässige Motor-Schräglage erfasst wird. Dabei können unzulässig hohe Schräglagen hohe Motorneigungen sein, ohne dass es zum Überrollen kommt (z. B. von über 45°, 60°, 75° oder über 80° relativ zur Horizontalen) und/oder hohe Motorneigungen, gefolgt von einem Überrollen des Motors (insbesondere Schräglage größer 180°).

Das Kurbelgehäuseentlüftungssystem, insbesondere der Blowby-Abscheidebehälter, ist zweckmäßig ausgeführt, um zu verhindern, dass im Motorbetrieb bei Hochschräglagen oder beim Überrollen des Motors und/oder des Kurbelgehäuseentlüftungssystems Öl, z. B. aus einer Ölwanne, in einen Brennraum des Motors eindringen kann.

Zu erwähnen ist, dass im Rahmen der Erfindung das Kurbelgehäuseentlüftungssystem z. B. eine oder mehrere Entnahmestellen, einen oder mehrere Blowby-Abscheider, eine oder mehrere Blowby-Verbindungseinrichtungen, ein oder mehrere Blowby-Verbindungsmittel, ein oder mehrere Absperrelemente, ein oder mehrere Öl-Rücklaufelemente, ein oder mehrere Öl-Rücklaufmittel und/oder einen oder mehrere Blowby-Abscheidebehälter umfassen kann.

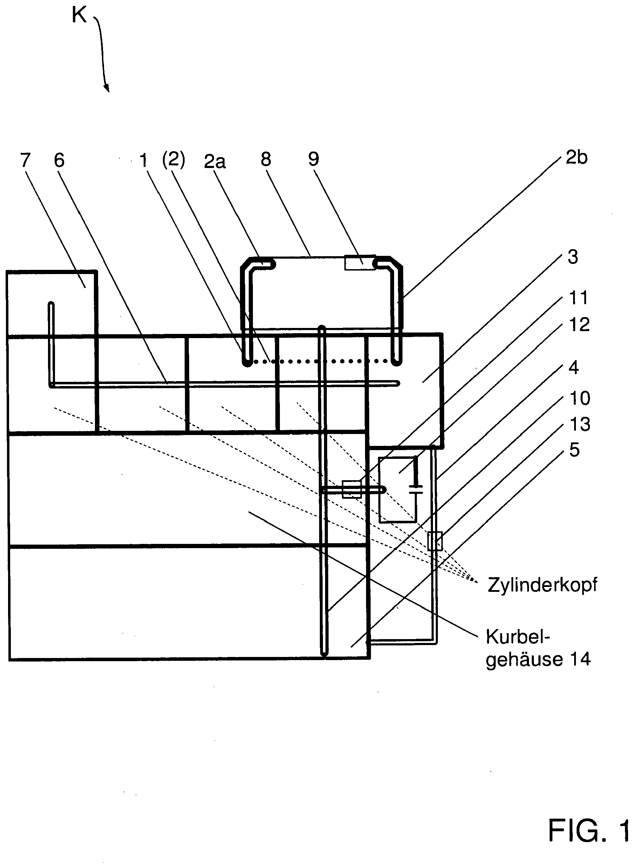

Die zuvor beschriebenen Ausführungsformen und Merkmale der Erfindung sind miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit der beigefügten Figur 1, die ein Kurbelgehäuseentlüftungssystem gemäß einer Ausführungsform der Erfindung zeigt.

Figur 1 zeigt eine schematische Ansicht eines Kurbelgehäuseentlüftungssystems K gemäß einer Ausführungsform der Erfindung, zweckmäßig für einen im Betrieb überrollfähigen und/oder hochschräglagenfähigen Motor und/oder zur Ermöglichung hiervon.

Die Eigenschaft der Überrollfähigkeit eines Motors im Betrieb bzw. eines Hochschräglagenbetriebs eines Motors wird insbesondere für Motoren für hochdynamische Schiffe gefordert, z. B. Rettungsboote.

Das Merkmal des Hoch-Schräglagenbetriebs bzw. der Hoch-Schräglagenfähigkeit umfasst im Rahmen der Erfindung zweckmäßig Neigungen von über 45°, über 60°, über 75° oder über 80° im Betrieb des Kurbelgehäuseentlüftungssystems K bzw. des Motors relativ zur Horizontalen.

Das Merkmal der Überrollfähigkeit bzw. des Überrollens meint insbesondere Überkopf-Drehungen und/oder 360°-Drehungen im Betrieb des Kurbelgehäuseentlüftungssystems K bzw. des Motors.

Das Kurbelgehäuseentlüftungssystem K umfasst eine Entnahmestelle 1 für Blowby, ein Kurbelgehäuse 14, einen Verdichter 7 mit Ansaugstutzen, einen Blowby-Abscheider 3, und eine Ölwanne 5. Das Blowby-Verbindungselement 2 ist Bestandteil einer nicht-überrollfähigen Ausführungsform gemäß Stand der Technik und dient nur als Hintergrundinformation. Das Blowby-Verbindungselement 2 ist nicht Teil des Kurbelgehäuseentlüftungssystems K.

Das Kurbelgehäuseentlüftungssystem K umfasst ferner eine Öl-Rücklaufleitung 4 (Öl-Rücklaufmittel) von dem Blowby-Abscheider 3 in die Ölwanne 5 und eine Leitung 6 für gereinigtes Blowby zur Verbindung des Blowby-Abscheiders 3 mit dem Ansaugstutzen des Verdichters 7.

Das Kurbelgehäuseentlüftungssystem K umfasst zusätzlich zum Blowby-Abscheider 3 einen Blowby-Abscheidebehälter 8, der mit dem Blowby-Abscheider 3 verbunden ist.

Der Blowby-Abscheidebehälter 8 ist über dem Niveau des Blowby-Abscheiders 3 angeordnet, vorzugsweise unmittelbar darüber. Auch andere Anordnungen, z.B. seitlich am Motor sind möglich.

Eine Blowby-Verbindungseinrichtung 2a (z. B. eine Verbindungsleitung) verbindet den Blow-by-Abscheidebehälter 8 mit der Entnahmestelle 1.

Ein Blowby-Verbindungsmittel 2b (z. B. eine Verbindungsleitung) verbindet den Blowby-Abscheider 3 mit dem Blowby-Abscheidebehälter 8. Das Blowby-Verbindungsmittel 2b umfasst im Blowby-Abscheidebehälter 8 einen oberen im Wesentlichen horizontalen Abschnitt und einen davon nach unten abgehenden, vorzugsweise im Wesentlichen vertikalen, Abschnitt.

Der Medienfluss gestaltet sich im Wesentlichen wie folgt: Entnahme, Eintritt in den Abscheidebehälter 8, Austritt aus dem Abscheidebehälter 8, Eintritt in den Abscheider 3, Eintritt in einen Ansaugstutzen.

Das Blowby-Verbindungsmittel 2b ist mit einem Absperrteil 9 in Form eines Ventils oder einer Klappe verbunden. Das Absperrteil 9 ist ausgeführt, um eine Blowby-Strömung aus dem Blowby-Abscheidebehälter 8 in Richtung des Blowby-Abscheiders 3 oder gar in den Blowby-Abscheider 3 zu verhindern. Das Absperrteil 9 ist in der gezeigten Ausführungsform in den Blowby-Abscheidebehälter 8 integriert und kann ausgeführt sein, um elektrisch, mechanisch oder pneumatisch angesteuert zu werden, vorzugsweise in Abhängigkeit einer Erfassungseinrichtung zur Erfassung von Motor-Schräglagen. Das Absperrteil 9 kann auch ausserhalb des Abscheidebehälters 8 platziert werden.

Das Absperrteil 9 ist optional, sofern nur ein Hoch-Schräglagenbetrieb des Motors ermöglicht werden soll. Sofern das Absperrteil 9 nicht eingesetzt wird, kann der Blowby-Abscheidebehälter 8 als Sammelvolumen bzw. als Grob- und/oder Vorabscheider dienen.

Der Blowby-Abscheidebehälter 8 ist über ein Öl-Rücklaufelement 10 (Öl-Rücklaufleitung) mit der Ölwanne 5 verbunden. Der Blowby-Abscheider 3 ist über ein Öl-Rücklaufmittel 4 (Öl-Rücklaufleitung) mit der Ölwanne 5 verbunden. Das Öl-Rücklaufmittel 4 kann ein Sicherheitsmittel 13 in Form eines Rückschlagventils, Magnetventils oder einer Klappe aufweisen, um eine Rückströmung von Öl aus der Ölwanne 5 in den Blowby-Abscheider 3 zu verhindern.

Das Kurbelgehäuseentlüftungssystem K umfasst einen Auffangbehälter 12. Der Auffangbehälter 12 steht über ein Sicherheitselement 11 mit dem Öl-Rücklaufelement 10 in Verbindung. Das Sicherheitselement 11 kann als Klappe oder Ventil ausgeführt sein, vorzugsweise als Überdruck- und/oder Magnetventil. Wenn der Druck im Kurbelgehäuseentlüftungssystem K über ein zulässiges Niveau ansteigt, z. B. beim Überrollen und/oder einem Hochschräglagenbetrieb, wird vorzugsweise das Absperrteil 9 geschlossen und das Sicherheitselement 11 geöffnet, so dass eventuell austretendes Öl über das Sicherheitselement 11 in den Auffangbehälter 12 gelangen kann. Die Entnahme über den Zylinderkopf ist allerdings nur eine Option.

Das Kurbelgehäuseentlüftungssystem K, insbesondere der Öl-Abscheidebehälter 8, dient zweckmäßig zur Verhinderung, dass im Motorbetrieb bei Hochschräglagen oder beim Überrollen des Motors und/oder des Kurbelgehäuseentlüftungssystems K Öl aus der Ölwanne 5 in einen Brennraum des Motors eindringen kann, z. B. von der Kürbelgehäuseentlüftung mitgerissen bzw. angesaugt wird und so in den Brennraum gelangt, was in der Folge zu einem Motorschaden führen kann.

Das Kurbelgehäuseentlüftungssystem K kann eine nicht gezeigte Erfassungseinrichtung umfassen zur mittelbaren oder unmittelbaren Erfassung von Motor-Schräglagen im Betrieb des Motors. Die Erfassungseinrichtung kann z. B. einen Neigungssensor, seismischen Sensor, Pendel, etc. umfassen.

Das Absperrteil 9 kann für eine definierte Zeit geschlossen werden, wenn durch die Erfassungseinrichtung eine vordefinierte oder unzulässige Motor-Schräglage erfasst wird. Alternativ oder ergänzend kann der Motor reduziert betrieben oder abgestellt werden, wenn durch die Erfassungseinrichtung eine vordefinierte oder unzulässige Motor-Schräglage erfasst wird. Unzulässig hohe Motor-Schräglagen können hohe Neigungen umfassen, ohne dass es zum Überrollen des Motors kommt, oder hohe Neigungen umfassen, gefolgt von einem Überrollen des Motors.

Die Funktion bzw. der Betrieb des Kurbelgehäuseentlüftungssystems K kann wie folgt beschrieben werden:
1. Unzulässiger Schräglagenbetrieb und/oder Überrollen eines Motors
2. Ausgabe eines Schaltsignals durch die Erfassungseinrichtung
3. Optionales Schließen des Absperrteils 9 für eine definierte Zeit
4. Optionaler Motorbetrieb mit reduzierter Drehzahl und/oder reduzierter Leistung für eine definierte Zeit
5. Eintreten von Öl in den Blowby-Abscheidebehälter 8
6. Eventuell Schließen des Sicherheitsmittels 13
7. Eventuell Öffnen des Sicherheitselements 11 und Absteuerung von Blowby in den Auffangbehälter 12
8. Aufrichten des Motors nach dem unzulässigen Schräglagenbetrieb mit oder ohne Überrollen
9. Ablaufen des Ölvolumens aus dem Blowby-Abscheidebehälter 8 in die Ölwanne 5 über Öl-Rücklaufelement 10
10. Wenn nach Ablauf einer definierten Zeit noch immer ein unzulässiger Schräglagenbetrieb erfasst wird, werden die zuvor beschriebenen Vorgänge fortgesetzt
11. Wenn nach Ablauf einer definierten Zeit ein zulässiger Schräglagenbetrieb erfasst wird, kann das optionale Absperrteil 9 geöffnet und der reguläre Motorbetrieb ermöglicht werden bzw. einsetzen.

In der Praxis können die zuvor beschriebenen Vorgänge unter Umständen in geänderter Reihenfolge und/oder zeitgleich ablaufen.

### Bezugszeichenliste

- 1: Entnahmestelle für Blowby
- (2: Blowby-Verbindungselement von Entnahmestelle zu Blowby-Abscheider (Stand der Technik))
- 2a: Blowby-Verbindungseinrichtung, z. B. Verbindungsleitung, von Blowby-Abscheidebehälter zu Entnahmestelle
- 2b: Blowby-Verbindungsmittel, z. B. Verbindungsleitung, von Blowby-Abscheider zu Blowby-Abscheidebehälter
- 3: Blowby-Abscheider
- 4: Öl-Rücklaufmittel, z. B. Öl-Rücklaufleitung
- 5: Ölwanne
- 6: Leitungselement für gereinigtes Blowby von Blowby-Abscheider zu Ansaugeinrichtung eines Verdichters
- 7: Verdichter
- 8: Blowby-Abscheidebehälter
- 9: Absperrteil, z. B. Ventil oder Klappe
- 10:: Öl-Rücklaufelement, z. B. Öl-Rücklaufleitung
- 11: Sicherheitselement, z. B. Ventil oder Klappe
- 12: Auffangbehälter
- 13: Sicherheitsmittel, z. B. Ventil oder Klappe
- K: Kurbelgehäuseentlüftungssystem

## Patentansprüche

1. Kurbelgehäuseentlüftungssystem (K), vorzugsweise für einen im Betrieb überrollfähigen und/oder hochschräglagenfähigen Motor und/oder zur Ermöglichung hiervon, mit einem Kurbelgehäuse, zumindest einem Blowby-Abscheider (3) und vorzugsweise zumindest einer Entnahmestelle (1) für Blowby, wobei das Kurbelgehäuseentlüftungssystem (K) zusätzlich zum zumindest einen Blowby-Abscheider (3) einen Blowby-Abscheidebehälter (8) aufweist und der zumindest eine Blowby-Abscheider (3) und der Blowby-Abscheidebehälter (8) miteinander in Verbindung stehen, **dadurch gekennzeichnet, dass** das Kurbelgehäuseentlüftungssystem (K) einen Auffangbehälter (12) für beim Überrollen und/oder im Hochschräglagenbetrieb austretendes Öl aufweist und der Auffangbehälter (12) mit zumindest einem Öl-Rücklaufelement (10) verbunden ist und das Kurbelgehäuseentlüftungssystem (K) ausgeführt ist, um zu verhindern, dass im Motorbetrieb bei Hochschräglagen oder beim Überrollen des Motors und/oder des Kurbelgehäuseentlüftungssystems (K) Öl in einen Brennraum des Motors eindringen kann.

2. Kurbelgehäuseentlüftungssystem (K) nach Anspruch 1, wobei der Blowby-Abscheidebehälter (8) über dem Niveau des zumindest einen Blowby-Abscheiders (3) und/oder seitlich an einem Motor angeordnet ist oder vom Motor separiert angeordnet ist.

3. Kurbelgehäuseentlüftungssystem (K) nach Anspruch 1 oder 2, wobei der zumindest eine Blowby-Abscheider (3) über zumindest ein Blowby-Verbindungsmittel (2b) mit dem Blowby-Abscheidebehälter (8) verbunden ist.

4. Kurbelgehäuseentlüftungssystem (K) nach einem der vorhergehenden Ansprüche, wobei der Blowby-Abscheidebehälter (8) über zumindest eine Blowby-Verbindungseinrichtung (2a) mit der zumindest einen Entnahmestelle (1) verbunden ist.

5. Kurbelgehäuseentlüftungssystem (K) nach Anspruch 3 oder 4, wobei das zumindest eine Blowby-Verbindungsmittel (2b) mit einem Absperrteil (9) verbunden ist und das Absperrteil (9) zum Verhindern einer Blowby-Strömung aus dem Blowby-Abscheidebehälter (8) in Richtung des zumindest einen Blowby-Abscheiders (3) oder in den Blowby-Abscheider (3) dient.

6. Kurbelgehäuseentlüftungssystem (K) nach Anspruch 5, wobei das Absperrteil (9) in den Blowby-Abscheidebehälter (8) integriert ist und/oder ausgeführt ist, um elektrisch, mechanisch oder pneumatisch angesteuert zu werden.

7. Kurbelgehäuseentlüftungssystem (K) nach einem der Ansprüche 3 bis 6, wobei die zumindest eine Blowby-Verbindungseinrichtung (2a) und/oder das zumindest eine Blowby-Verbindungsmittel (2b) einen oberen, vorzugsweise horizontalen, Abschnitt und einen vorzugsweise davon abgehenden unteren Abschnitt umfasst.

8. Kurbelgehäuseentlüftungssystem (K) nach einem der vorhergehenden Ansprüche, wobei der Blowby-Abscheidebehälter (8) über das zumindest eine Öl-Rücklaufelement (10) mit einer Ölwanne (5) verbunden ist.

9. Kurbelgehäuseentlüftungssystem (K) nach einem der vorhergehenden Ansprüche, wobei der zumindest eine Blowby-Abscheider (3) über zumindest ein Öl-Rücklaufmittel (4) mit einer Ölwanne (5) verbunden ist.

10. Kurbelgehäuseentlüftungssystem (K) nach Anspruch 9, wobei das zumindest eine Öl-Rücklaufmittel (4) ein Sicherheitsmittel (13) aufweist und das Sicherheitsmittel (13) ausgeführt ist, um eine Rückströmung von Öl aus der Ölwanne (5) in den zumindest einen Blowby-Abscheider (3) zu verhindern.

11. Kurbelgehäuseentlüftungssystem (K) nach Anspruch 10, wobei das Sicherheitsmittel (13) eine Klappe oder ein Ventil umfasst, vorzugsweise ein Rückschlag- oder Magnetventil.

12. Kurbelgehäuseentlüftungssystem (K) nach einem der vorhergehenden Ansprüche, wobei ein Sicherheitselement (11) zur Öffnung beim Überrollen und/oder im Hoch-schräglagenbetrieb ausgeführt ist, so dass austretendes Öl über das Sicherheitselement (11) in den Auffangbehälter (12) führbar ist.

13. Kurbelgehäuseentlüftungssystem (K) nach Anspruch 12, wobei das Sicherheitselement (11) als Klappe oder Ventil ausgeführt ist, vorzugsweise als Überdruck- und/oder Magnetventil.

14. Kurbelgehäuseentlüftungssystem (K) nach einem der vorhergehenden Ansprüche, wobei das Kurbelgehäuseentlüftungssystem (K) mit zumindest einer Erfassungseinrichtung zur Erfassung von Motor-Schräglagen verbunden ist.

15. Kurbelgehäuseentlüftungssystem (K) nach Anspruch 14, wobei das Absperrteil (9) für eine definierte Zeit geschlossen wird und/oder der Motor reduziert betrieben oder abgestellt wird, wenn durch die zumindest eine Erfassungseinrichtung eine vordefinierte und/oder unzulässige Motor-Schräglage erfasst wird.

16. Kurbelgehäuseentlüftungssystem (K) nach einem der vorhergehenden Ansprüche, wobei zumindest ein Leitungselement (6) für gereinigtes Blowby von dem zumindest einen Blowby-Abscheider (3) zu einer Ansaugeinrichtung eines Verdichters (7) führt.

17. Kurbelgehäuseentlüftungssystem (K) nach einem der vorhergehenden Ansprüche, wobei der Blowby-Abscheidebehälter (8) ausgeführt ist, um zu verhindern, dass im Motorbetrieb bei Hochschräglagen oder beim Überrollen des Motors und/oder des Kurbelgehäuseentlüftungssystems (K) Öl in einen Brennraum des Motors eindringen kann.

## Claims

1. Crankcase ventilation system (K), preferably for an engine capable of operation in roll-over situations and/or in steeply oblique positions, and/or for permitting such operation, having a crankcase, having at least one blow-by separator (3) and preferably having at least one extraction point (1) for blow-by, wherein, in addition to the at least one blow-by separator (3), the crankcase ventilation system (K) has a blow-by separation container (8), and the at least one blow-by separator (3) and the blow-by separation container (8) are connected to one another, **characterized in that** the crankcase ventilation system (K) has a collecting container (12) for oil escaping during operation in roll-over situations and/or in steeply oblique positions, and the collecting container (12) is connected to at least one oil return element (10), and the crankcase ventilation system (K) is designed to prevent oil from being able to enter a combustion chamber of the engine during engine operation in steeply oblique positions or in roll-over situations of the engine and/or of the crankcase ventilation system (K).

2. Crankcase ventilation system (K) according to Claim 1, wherein the blow-by separation container (8) is arranged above the level of the at least one blow-by separator (3) and/or laterally on an engine or separately from the engine.

3. Crankcase ventilation system (K) according to Claim 1 or 2, wherein the at least one blow-by separator (3) is connected to the blow-by separation container (8) via at least one blow-by connecting means (2b).

4. Crankcase ventilation system (K) according to one of the preceding claims, wherein the blow-by separation container (8) is connected to the at least one extraction point (1) via at least one blow-by connecting device (2a).

5. Crankcase ventilation system (K) according to Claim 3 or 4, wherein the at least one blow-by connecting means (2b) is connected to a shut-off part (9), and the shut-off part (9) serves for preventing a blow-by flow from the blow-by separation container (8) in the direction of the at least one blow-by separator (3) or into the blow-by separator (3).

6. Crankcase ventilation system (K) according to Claim 5, wherein the shut-off part (9) is integrated into the blow-by separation container (8) and/or is designed to be actuated electrically, mechanically or pneumatically.

7. Crankcase ventilation system (K) according to one of Claims 3 to 6, wherein the at least one blow-by connecting device (2a) and/or the at least one blow-by connecting means (2b) comprise(s) an upper, preferably horizontal, section and a lower section which preferably departs from said upper section.

8. Crankcase ventilation system (K) according to one of the preceding claims, wherein the blow-by separation container (8) is connected to an oil pan (5) via the at least one oil return element (10).

9. Crankcase ventilation system (K) according to one of the preceding claims, wherein the at least one blow-by separator (3) is connected to an oil pan (5) via at least one oil return means (4).

10. Crankcase ventilation system (K) according to Claim 9, wherein the at least one oil return means (4) has a safety means (13), and the safety means (13) is designed to prevent a back flow of oil from the oil pan (5) into the at least one blow-by separator (3).

11. Crankcase ventilation system (K) according to Claim 10, wherein the safety means (13) comprises a flap or a valve, preferably a check valve or solenoid valve.

12. Crankcase ventilation system (K) according to one of the preceding claims, wherein a safety element (11) is designed to open during operation in roll-over situations and/or in steeply oblique positions, such that escaping oil is able to be conducted into the collecting container (12) via the safety element (11) .

13. Crankcase ventilation system (K) according to Claim 12, wherein the safety element (11) is in the form of a flap or valve, preferably in the form of an overpressure and/or solenoid valve.

14. Crankcase ventilation system (K) according to one of the preceding claims, wherein the crankcase ventilation system (K) is connected to at least one detection device for detecting engine oblique positions.

15. Crankcase ventilation system (K) according to Claim 14, wherein the shut-off part (9) is closed for a defined length of time, and/or the engine is operated in a reduced manner or is shut off, if a predefined and/or impermissible engine oblique position are/is detected by the at least one detection device.

16. Crankcase ventilation system (K) according to one of the preceding claims, wherein at least one line element (6) for purified blow-by leads from the at least one blow-by separator (3) to an intake device of a compressor (7).

17. Crankcase ventilation system (K) according to one of the preceding claims, wherein the blow-by separation container (8) is designed to prevent oil from being able to enter a combustion chamber of the engine during engine operation in steeply oblique positions or in roll-over situations of the engine and/or of the crankcase ventilation system (K).

## Revendications

1. Système de ventilation de carter de vilebrequin (K), de préférence pour un moteur pouvant fonctionner en cas de renversement et/ou de position inclinée haute et/ou rendant ceci possible, comprenant un carter de vilebrequin, au moins un séparateur de gaz de carter (3) et de préférence au moins un point de prélèvement (1) pour des gaz de carter, le système de ventilation de carter de vilebrequin (K) présentant en plus dudit au moins un séparateur de gaz de carter (3) une cuve de séparation de gaz de carter (8) et ledit au moins un séparateur de gaz de carter (3) et la cuve de séparation de gaz de carter (8) étant en communication l'un avec l'autre, **caractérisé en ce que** le système de ventilation de carter de vilebrequin (K) présente un bac collecteur (12) pour l'huile s'échappant en cas de renversement et/ou de fonctionnement en position inclinée haute, et le bac collecteur (12) est relié à au moins un élément de retour d'huile (10), et le système de ventilation de carter de vilebrequin (K) est réalisé pour empêcher que de l'huile ne puisse pénétrer dans la chambre de combustion du moteur en cas de fonctionnement du moteur dans des positions inclinées hautes ou de renversement du moteur et/ou du système de ventilation de carter de vilebrequin (K).

2. Système de ventilation de carter de vilebrequin (K) selon la revendication 1, dans lequel la cuve de séparation de gaz de carter (8) est disposée au-dessus du niveau dudit au moins un séparateur de gaz de carter (3) et/ou latéralement sur un moteur ou est disposée séparément du moteur.

3. Système de ventilation de carter de vilebrequin (K) selon la revendication 1 ou 2, dans lequel ledit au moins un séparateur de gaz de carter (3) est relié à la cuve de séparation de gaz de carter (8) par l'intermédiaire d'au moins un moyen de raccordement de gaz de carter (2b).

4. Système de ventilation de carter de vilebrequin (K) selon l'une quelconque des revendications précédentes, dans lequel la cuve de séparation de gaz de carter (8) est reliée à un point de prélèvement (1) par l'intermédiaire d'au moins un dispositif de raccordement de gaz de carter (2a).

5. Système de ventilation de carter de vilebrequin (K) selon la revendication 3 ou 4, dans lequel ledit au moins un moyen de raccordement de gaz de carter (2b) est relié à un obturateur (9) et l'obturateur (9) sert à empêcher un courant de gaz de carter sortant de la cuve de séparation de gaz de carter (8) en direction dudit au moins un séparateur de gaz de carter (3) ou dans le séparateur de gaz de carter (3).

6. Système de ventilation de carter de vilebrequin (K) selon la revendication 5, dans lequel l'obturateur (9) est intégré dans la cuve de séparation de gaz de carter (8) et/ou est réalisé pour être piloté de manière électrique, mécanique ou pneumatique.

7. Système de ventilation de carter de vilebrequin (K) selon l'une quelconque des revendications 3 à 6, dans lequel ledit au moins un dispositif de raccordement de gaz de carter (2a) et/ou ledit au moins un moyen de raccordement de gaz de carter (2b) comprennent une partie supérieure, de préférence horizontale, et une partie inférieure, de préférence s'éloignant de celle-ci.

8. Système de ventilation de carter de vilebrequin (K) selon l'une quelconque des revendications précédentes, dans lequel la cuve de séparation de gaz de carter (8) est reliée à une cuvette à huile (5) par l'intermédiaire dudit au moins un élément de retour d'huile (10).

9. Système de ventilation de carter de vilebrequin (K) selon l'une quelconque des revendications précédentes, dans lequel ledit au moins un séparateur de gaz de carter (3) est relié à une cuvette à huile (5) par l'intermédiaire d'au moins un moyen de retour d'huile (4).

10. Système de ventilation de carter de vilebrequin (K) selon la revendication 9, dans lequel ledit au moins un moyen de retour d'huile (4) présente un moyen de sécurité (13) et le moyen de sécurité (13) est réalisé pour empêcher un reflux d'huile de la cuvette à huile (5) dans ledit au moins un séparateur de gaz de carter (3).

11. Système de ventilation de carter de vilebrequin (K) selon la revendication 10, dans lequel le moyen de sécurité (13) comprend un clapet ou une vanne, de préférence un clapet antiretour ou une électrovanne.

12. Système de ventilation de carter de vilebrequin (K) selon l'une quelconque des revendications précédentes, dans lequel un élément de sécurité (11) destiné à s'ouvrir en cas de renversement et/ou de fonctionnement en position inclinée haute est réalisé de telle sorte que de l'huile qui s'échappe peut être acheminée dans le bac collecteur (12) en passant par l'élément de sécurité (11).

13. Système de ventilation de carter de vilebrequin (K) selon la revendication 12, dans lequel l'élément de sécurité (11) est réalisé sous la forme de clapet ou de vanne, de préférence sous la forme d'une soupape de surpression et/ou d'une électrovanne.

14. Système de ventilation de carter de vilebrequin (K) selon l'une quelconque des revendications précédentes, dans lequel le système de ventilation de carter de vilebrequin (K) est relié à au moins un dispositif de détection pour détecter des positions inclinées du moteur.

15. Système de ventilation de carter de vilebrequin (K) selon la revendication 14, dans lequel l'obturateur (9) est fermé pendant une durée définie et/ou le moteur est amené à fonctionner de manière réduite ou est coupé si ledit au moins un dispositif de détection détecte une position inclinée du moteur, prédéfinie et/ou inadmissible.

16. Système de ventilation de carter de vilebrequin (K) selon l'une quelconque des revendications précédentes, dans lequel au moins un élément de conduite (6) pour le gaz de carter épuré mène dudit au moins un séparateur de gaz de carter (3) à un dispositif d'admission d'un compresseur (7).

17. Système de ventilation de carter de vilebrequin (K) selon l'une quelconque des revendications précédentes, dans lequel la cuve de séparation de gaz de carter (8) est réalisée pour empêcher que lors d'un fonctionnement du moteur dans des positions inclinées hautes ou en cas de renversement du moteur et/ou du système de ventilation de carter de vilebrequins (K), de l'huile ne puisse pénétrer dans une chambre de combustion du moteur.
